# EUROPEAN PATENT APPLICATION

(11) **EP 2 063 249 A2**
(43) Date of publication of application: **27.05.2009**
(21) Application number: 08170030.4
(22) Date of filing: 26.11.2008
(51) Int. Cl.: G01N 11/14

(54) **Rheometer Attachment**

(30) Priority: 26.11.2007 US 990140 P; 10.06.2008 US 60175 P
(71) Applicant: Xpansion Instruments, LLC, Tallmadge, OH 44278 (US)
(72) Inventor: Sentmanat, Martin Lamar, Akron, OH 44303 (US)
(74) Representative: Patentanwälte Freischem

(57) **Abstract**

A rheometer attachment may comprise a material processing device. The material processing device is adapted for removable engagement with a rheometer. The material processing device comprises a first rotatable shaft, a second rotatable shaft, a processing element, and a material holding vessel. The processing element is engagable with the first rotatable shaft or the second rotatable shaft. The material holding vessel comprises a cavity.

## Description

### TECHNICAL FIELD

Provided is a rheometer attachment. More particularly, provided is a material processing device adapted for attachment to a rheometer.

### BACKGROUND

In applications involving exotic and/or experimental materials, the batch sizes of materials to be handled are often very small. Often, conventional laboratory-scale material handling devices are inappropriate for very small batch handling because of a lack of appropriate measurement sensitivity.

Some material handling involving very small batches involves measurement sensitivities on the order of those provided by some modern commercial rheometers. Some modern commercial rheometers specialize in sophisticated and highly sensitive load and displacement measurements.

It remains desirable to provide material processing devices capable of handling very small batch sizes with the measurement sensitivity appropriate to very small batches.

### SUMMARY

Provided is a rheometer attachment which may comprise a material processing device. The material processing device may be adapted for removable engagement with a rheometer. The material processing device may comprise a first rotatable shaft, a second rotatable shaft, a processing element, and a material holding vessel. The processing element may be engagable with the first rotatable shaft or the second rotatable shaft. The material holding vessel may comprise a cavity.

Provided is a method for processing materials which may comprise the steps of removably engaging a material processing device with a rheometer, introducing material to be processed to the cavity, and processing the material with the material processing device. The material processing device may comprise a first rotatable shaft, a second rotatable shaft, a processing element, and a material holding vessel. The processing element may be engagable with the first rotatable shaft or the second rotatable shaft. The material holding vessel may comprise a cavity.

Provided is a rheometer attachment which may comprise a material processing device. The material processing device may be adapted for removable engagement with a viscoelastic rotational rheometer. The material processing device may comprise a material holding vessel, a first rotatable shaft, a second rotatable shaft, and a processing element. The material holding vessel may comprise a cavity. The volume of the cavity may be equal to or less than about 5 ml. The cavity may be adapted to be maintained at a controlled temperature or controlled pressure. The first rotatable shaft may be adapted to be rotated by the viscoelastic rotational rheometer. The processing element may be detachably engagable with the first rotatable shaft or the second rotatable shaft. The processing element may be adapted to be substantially contained by the cavity. The processing element may comprise a mixing element, or an extrusion element, or both a mixing element and an extrusion element.

### BRIEF DESCRIPTION OF THE DRAWINGS

FIG. 1A is a side view of components in an embodiment of a rheometer attachment.
FIG. 1B is a side view of components in an embodiment of a rheometer attachment.
FIG. 1C is a side view of components in an embodiment of a rheometer attachment.
FIG. 1D is a top cross-section view of components in an embodiment of a rheometer attachment.
FIG. 1E is a top cross-section view of components in an embodiment of a rheometer attachment.
FIG. 2A is a top cross-section view of components in an embodiment of a rheometer attachment.
FIG. 2B is a top cross-section view of components in an embodiment of a rheometer attachment.
FIG. 2C is a top cross-section view of components in an embodiment of a rheometer attachment.
FIG. 2D is a top cross-section view of components in an embodiment of a rheometer attachment.
FIG. 2E is a top cross-section view of components in an embodiment of a rheometer attachment.
FIG. 2F is a top cross-section view of components in an embodiment of a rheometer attachment.
FIG. 3 is a side cross-section view of an embodiment of a rheometer attachment and a rheometer.
FIG. 4 is a side cross-section view of an embodiment of a rheometer attachment and a rheometer.
FIG. 5 is a side cross-section view of an embodiment of a rheometer attachment and a rheometer.
FIG. 6 is a side cross-section view of an embodiment of a rheometer attachment and a rheometer.
FIG. 7 is a side cross-section view of an embodiment of a rheometer attachment and a rheometer.
FIG. 8 is a perspective view of an embodiment of a rheometer attachment.

### DETAILED DESCRIPTION

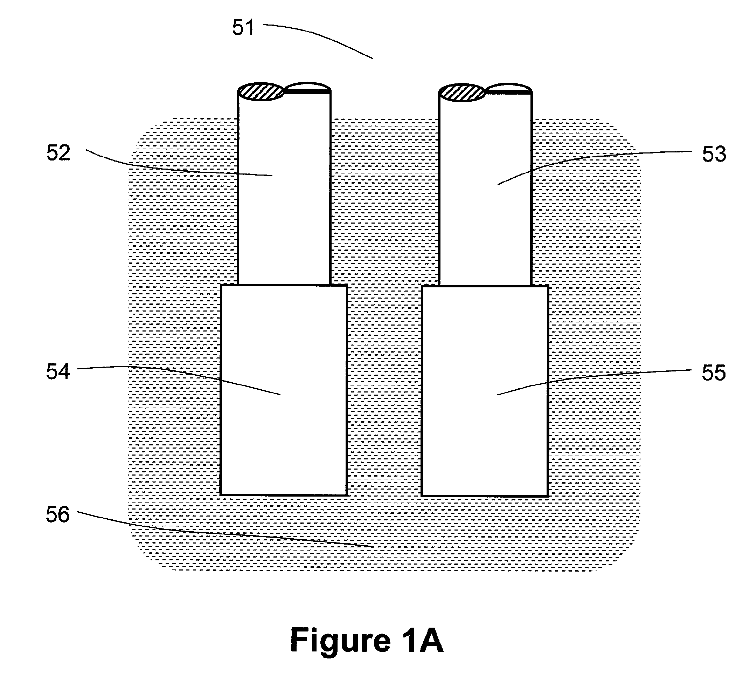

Reference will be made to the drawings, FIGS. 1A-8, wherein the showings are only for purposes of illustrating certain embodiments of a rheometer attachment, and not for purposes of limiting the same.

As used herein, a rheometer is any material testing device adapted to characterize the rheological and/or physical behavior of deformable material specimens and comprised of a driving means and a load sensing means or any combination of load application means and displacement sensing means. Rheometers include shear rheometers and extensional rheometers. Some rheometers are viscoelastic rheometers. In certain embodiments viscoelastic rheometers are adapted to measure the viscoelastic properties of a deformable material, are adapted to generate steady motion, are adapted to generate oscillatory motion, and are adapted to sense steady loads and/or oscillatory loads in a manner consistent with characterizing the strain and time dependent behavior of a deformable material. Some rheometers are rotational rheometers. Some research rotational rheometers are capable of measuring torque at levels on the order of 10^-9 Nm. Some quality control rheometers are capable of measuring torque at levels on the order of 10^-5 Nm. The term rheometer also applies to any type of universal testing machine or similar device, whether electromechanically or servohydraulically driven, adapted to convert linear motions and load sensing capabilities to rotational motions and torque sensing capabilities by mechanical translation means. Those skilled in the art will recognize that any other type of high-resolution, sensitive physical material testing device comprised of one or more displacement driving/sensing means and one or more load application/sensing means are also encompassed by the term rheometer.

As used herein, a material holding vessel is any vessel having a cavity adapted to accept material for processing and to retain material during processing. In certain embodiments, the material holding vessel comprises a removable or openable closure element adapted to permit user control of communication of the cavity with the environment. Without limitation, the material holding vessel can comprise a bowl, pot, cup, tub, chemical reactor chamber, or biochemical reactor chamber. Without limitation, a closure element may comprise a lid, stopper, cork, valve, or plug. In certain embodiments, material holding vessel is open to the environment. In certain embodiments, the material holding vessel is a mixing vessel adapted to hold material during mixing processes. In certain embodiments, the material holding vessel is an extruder barrel adapted to hold material during extrusion processes. In certain embodiments the capacity of the material holding vessel will be about equal to or less than 5ml.

As used herein, a bearing is a device to permit rotational motion between two parts. Without limitation bearings comprise, roller bearings, ball bearings, fluid bearings, magnetic bearings, jewel bearings, journal bearings, bushings, and combinations thereof.

As used herein, a coupler is a device to permit transmission of work. Without limitation, couplers comprise gear trains, wheel and pulley assemblies, gear and chain assemblies, rollers, mechanisms, mechanical linkages, hydraulics, pneumatics, generator and motor assemblies, and combinations thereof. In certain embodiments a coupler varies the torque, angular displacement, force, displacement, or other components of the transmitted work.

As used herein, a work transmission element can be any operational connection which transmits work. Without limitation, in certain embodiments, a work transmission element comprises a shaft, fluid connection, torque converter, lock-up torque converter, mechanical clutch, inductive clutch, magnetic clutch, cable, or combinations thereof.

In certain embodiments and without limitation, a rheometer attachment comprises a device detachably or fixedly engagable to a rheometer, the device comprising a chassis detachably or fixedly engagable to the motor or to the motor and the transducer of a commercial rheometer. In certain embodiments and without limitation, the chassis comprises a first shaft adapted to accept work from the motor, a second shaft operatively engaged with the first shaft, and shaft elements comprising mixer elements, extrusion screws, gear pump elements, grinder elements, stirrer elements, agitator elements, or other material processing tools, operatively engaged with each shaft. In certain embodiments and without limitation, the device comprises a material holding vessel comprising a cavity adapted to hold material being operated upon.

In certain embodiments, a rheometer attachment can comprise a material processing platform 51 comprising of a plurality of shafts 52 and 53 with shaft elements 54 and 55 capable of immersion within a temperature and/or pressure controlled environment 56 as shown in Figure 1A. In certain embodiments, the shaft elements 54 and 55 are each detachably engaged to one of the shafts 52 and 53. In certain embodiments, the shaft elements 54 and 55 are each fixedly engaged to one of the shafts 52 and 53.

Without limitation, shaft elements 54 and 55 can be configured in a variety of different shapes and sizes that can be constructed from a variety of different materials, which may include, but are not limited to, metal, metalloid, metal oxides, plastic, polymer, resin, rubber, ceramic, glass, cement, stone, graphite or related carbon structure materials, wood, cellulose, or any possible alloy or composite combination of said materials. Without limitation, the surfaces of shaft elements 54 and 55 can also be configured with any variety of prepared surface textures, coatings and finishes that may include, but are not limited to, precision machined surfaces, ground surfaces, mechanically roughened surfaces, serrated surfaces, porous surfaces, knurled surfaces, chemically treated surfaces, chemically functionalized surfaces, acid etched surfaces, polymer coatings, metal oxide coatings, adhesive coatings, metal sprayed surface coatings, plasma coated surfaces, composite coatings, high velocity oxygen fuel coatings, aluminum oxide, silicon carbide and other inorganic or organic particulate textured coatings in order to affect the adhesion of material samples to the shaft element surfaces during the treatment or processing of deformable materials. Since the adhesion or gripping properties of the shaft element surface is dependent upon the material in contact with said surface, any number of shaft element surfaces hereafter referenced may be specifically configured to promote or deter sample adhesion of a given material. Those skilled in the art will recognize other conceivable materials of construction and/or surface textures and coatings and combinations thereof may exist for use in the fabrication of the shaft elements.

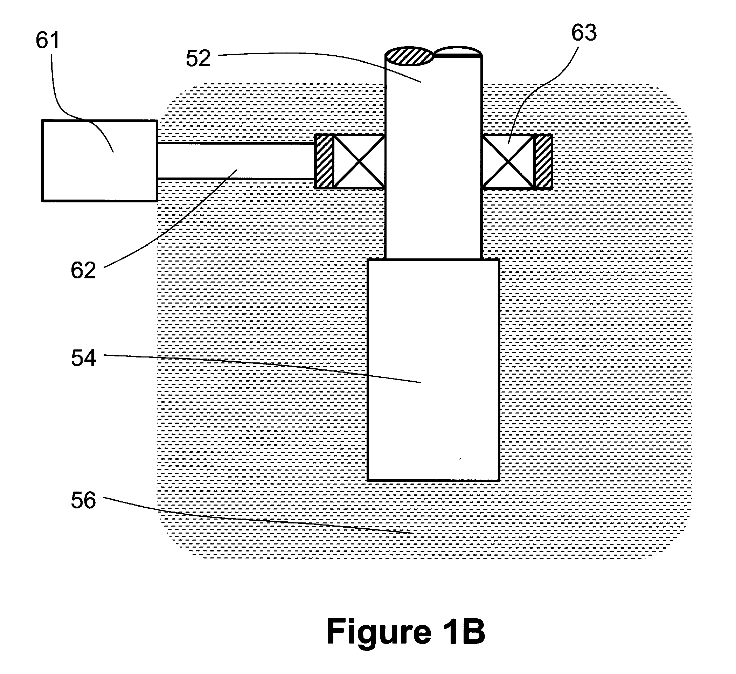

In certain embodiments, shafts and shaft elements can also be configured to allow for radial and/or axial load monitoring during operation of the rheometer attachment. In the non-limiting example depicted in Figure 1B, loads on a flexibly compliant shaft 52 can be monitored by load sensing means 61 associated with the shaft. In the non-limiting embodiment shown, the shaft 52 is engaged with a bearing 63; the bearing is housed within a load transfer linkage 62; and load transfer linkage 62 is connected to independent load sensing means 61. This embodiment allows for the free rotation of the shaft assembly 52 and transmits radial or axial loads witnessed by shaft element 54 to the load sensing means 61 via the load transfer linkage 62.

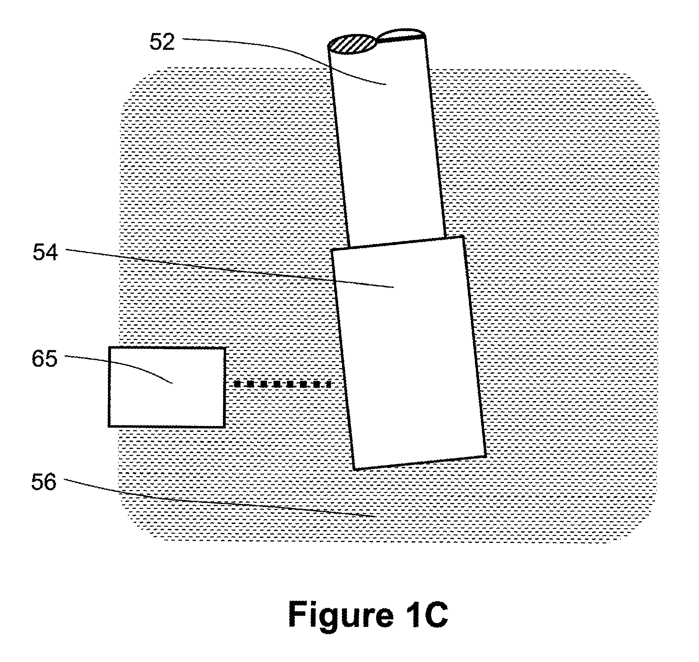

In the non-limiting example depicted in Figure 1C, the beam flexure of shaft 52 acting as a rotating, load-calibrated cantilevered spring member can be monitored with one or more displacement sensing means 65 to resolve the radial and/or axial loads imparted to shaft element 54. In the embodiment shown, displacement sensing means 65 can monitor the loads imparted regardless of the temperature and/or pressure of the environment 56.

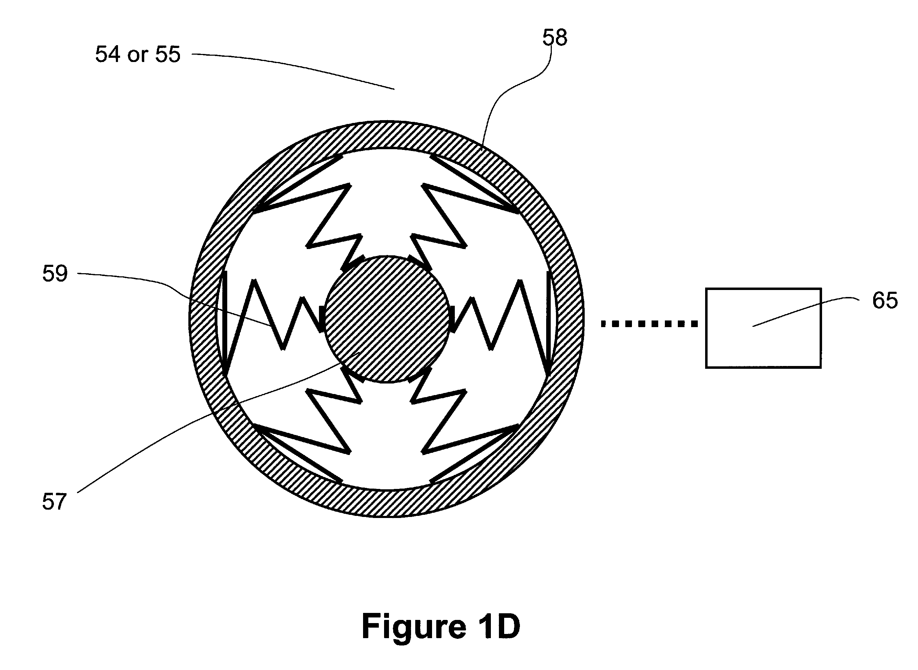

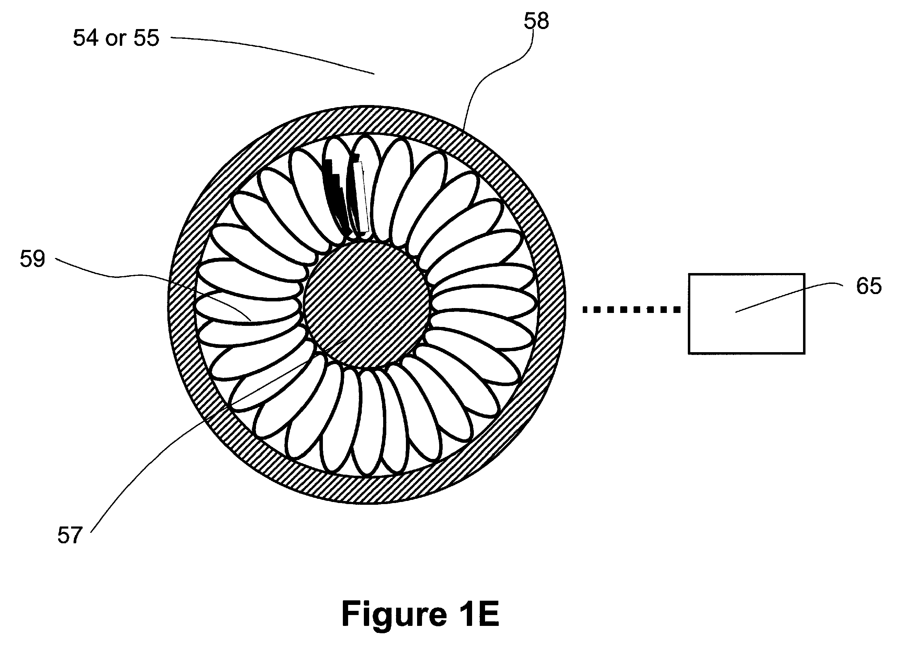

In the non-limiting embodiment depicted in Figure 1D and 1E, shaft element 54 or 55 can be configured with a rigid shaft element 57 and a shell element 58 that allows for radial and/or axial compliance with respect to the rigid shaft element 57 resulting from the deflection of load-calibrated, spring elements 59. In the non-limiting embodiment depicted in Figure 1D and 1E, radial and/or axial loads imparted on the shell element 58 can be resolved by monitoring the radial and/or axial deflection of said shell element 58 with respect to the rigid shaft element 57 with one or more displacement or load sensing means 65 regardless of the temperature and/or pressure of the environment. Displacement or load sensing means 65 may include, but are not limited to, sensors incorporating contact methods such as strain gages, piezoelectric load transducers, mechanical displacement measurement devices or non-contact devices/methods such as LVDT's, induction coils, load compensation devices, optical micrometers, optical encoders, photosensors, optically birefringent elements and sensors, videographic displacement measurement techniques, ultrasonic detectors, laser micrometers, capacitance probes, or any other conceivable means of precision displacement detection and measurement. Those skilled in the art will recognize that other conceivable load and displacement sensing means 65 not described herein may exist.

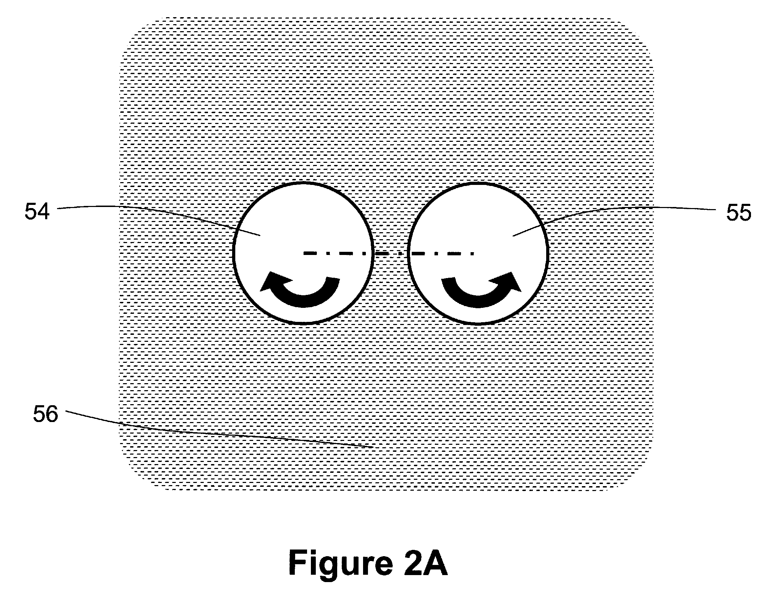

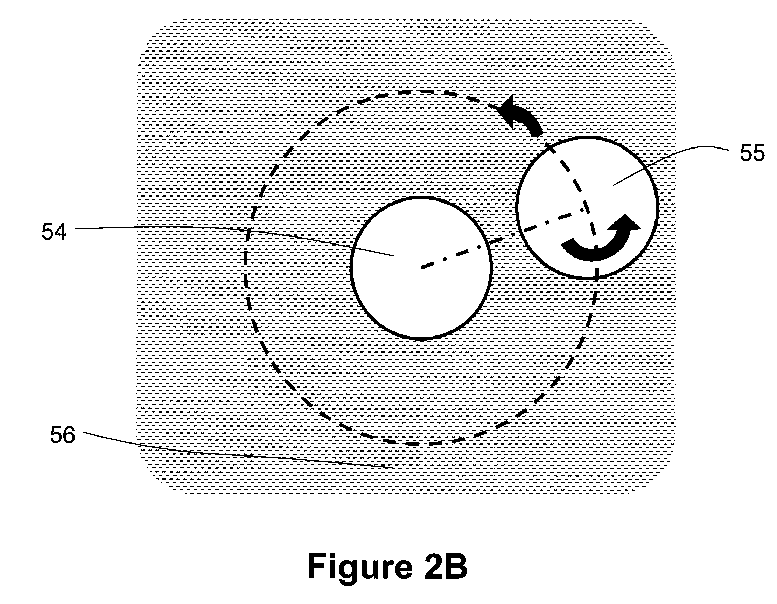

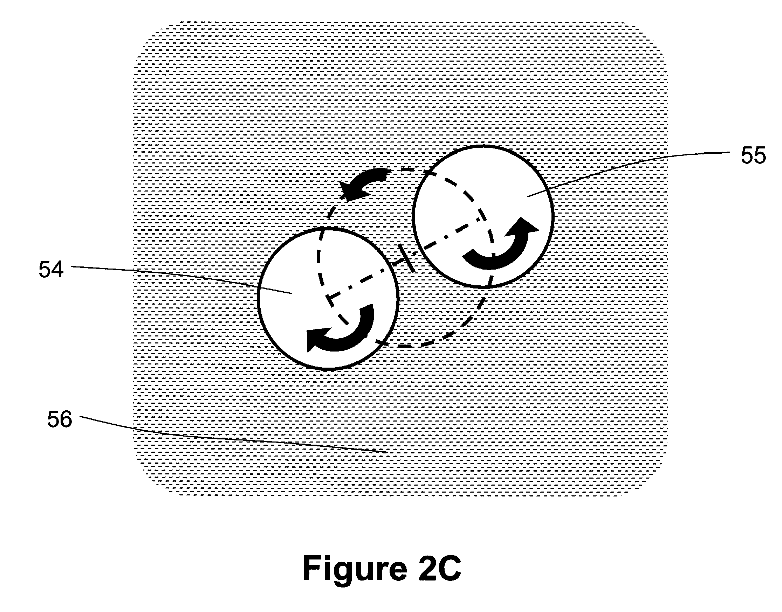

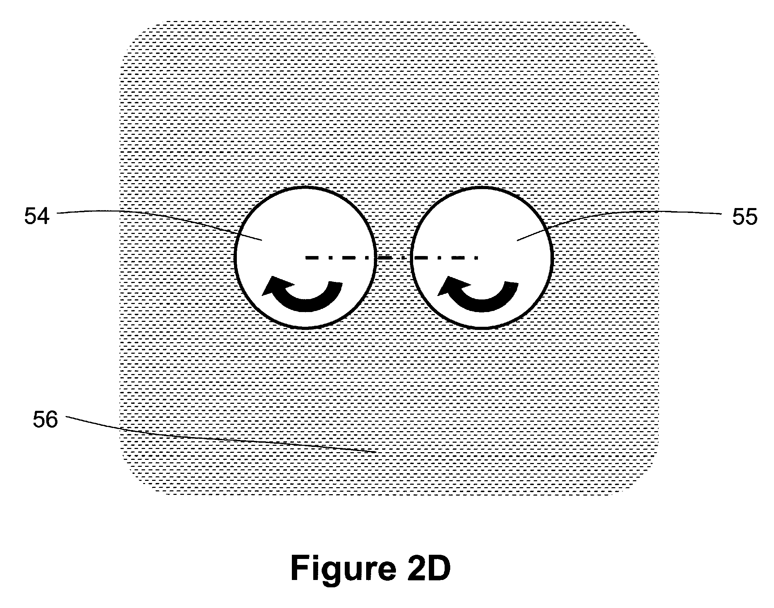

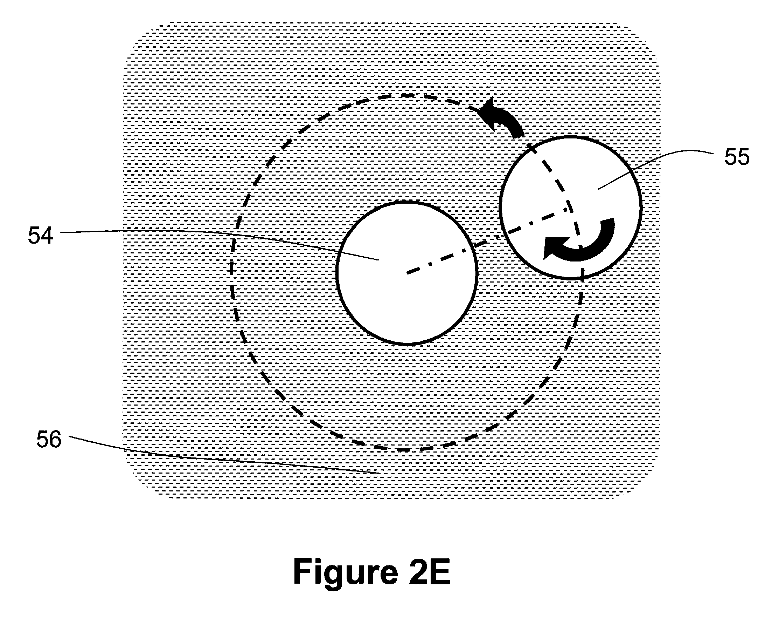

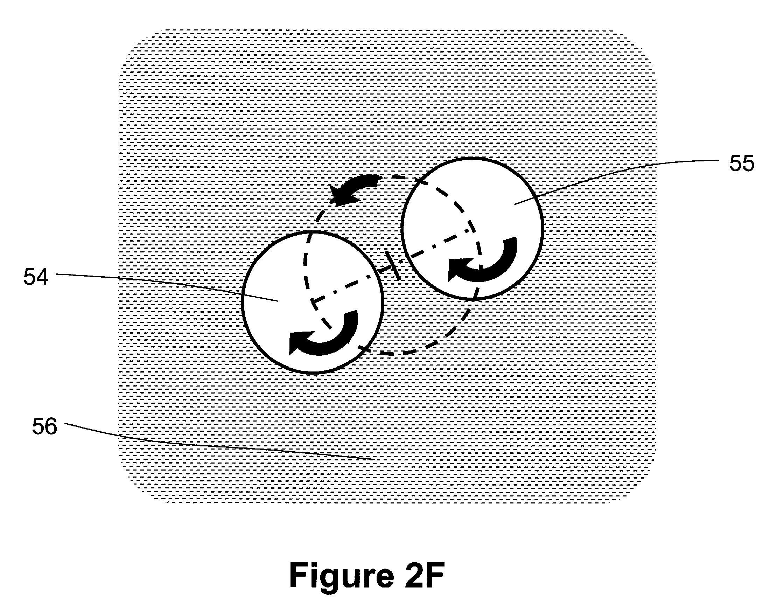

Shaft element 55 and/or 54 can be made to rotate by driving the rotation of shaft 53 and/or shaft 52 such that both shaft elements 54 and 55 can be made to counter-rotate relative to one another in a fixed plane of reference as depicted in Figure 2A, hereafter referred to as 'Motion 2A', or shaft element 55 can be made to rotate and orbit in the same rotational sense about the stationary shaft element 54 as shown in Figure 2B hereafter referred to as 'Motion 2B', or shaft elements 54 and 55 can be made to counter-rotate relative to one another and orbit about a reference axis as shown in Figure 2C hereafter referred to as 'Motion 2C', or both shaft elements 54 and 55 can be made to co-rotate relative to one another in a fixed plane of reference as depicted in Figure 2D hereafter referred to as 'Motion 2D', or shaft element 55 can be made to rotate and orbit in opposing rotational sense about the stationary shaft element 54 as shown in Figure 2E hereafter referred to as 'Motion 2E', or shaft elements 54 and 55 can be made to co-rotate relative to one another and orbit about a reference axis as shown in Figure 2F hereafter referred to as 'Motion 2F'. Motion 2A-2C each define shaft motions of a counter-rotational sense. Motion 2D-2F each define shaft motions of a co-rotational sense.

A rheometer attachment can be adapted to perform as a mixer, extruder, grinder, gear pump, chemical batch reactor, biochemical batch reactor, or any other material processing or transmission device.

The shaft elements can be configured as detachably or fixedly engaged mixing blades and/or rotor elements such that a rheometer attachment can be configured as a single rotor batch mixer, a multi-rotor batch mixer or a batch reactor. In certain embodiments, multi-rotor batch mixer devices are capable of mixing and compounding blends of liquids, solids, semi-solids, and/or viscoelastic media. In certain embodiments a batch reactor may be adapted to react gaseous ingredients with other materials. Without limitation, in certain embodiments a batch reactor may be adapted to react gaseous ingredients with other materials in a gas-phase polymerization reaction. Said mixing rotor elements can be configured of any type of material in any size or shape which may include but are by no means limited to sigma blades, ribbon blades, z-blades, Banbury blades, CAM blades, roller blades, whisk elements, paddle blades, pin rotors, beater pins, impeller blades, turbine blades, vane blades, kneader elements, screw elements, gear pump elements, grinder elements, or any other conceivable type of mixing rotor element known to those skilled in the art.

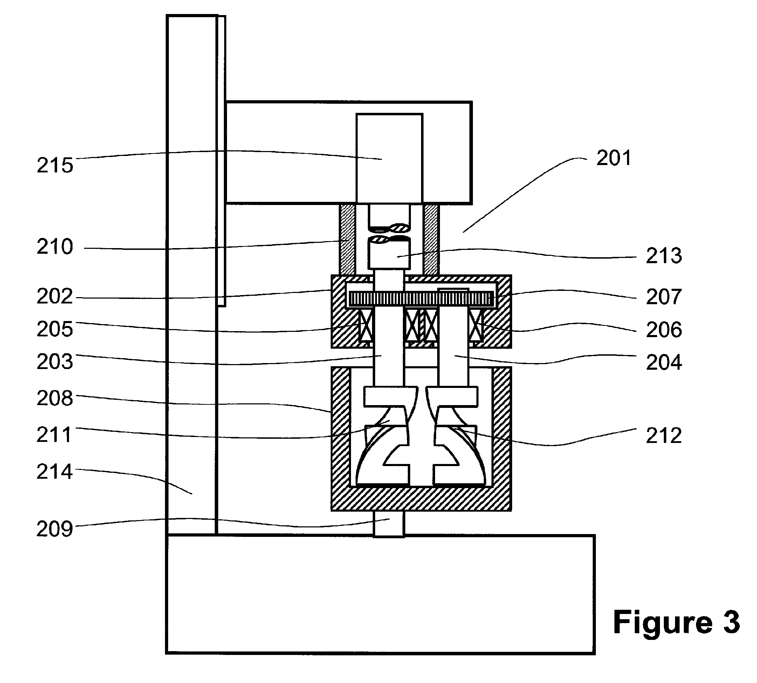

In the non-limiting embodiment shown in Figure 3, the device 201 of said embodiment is configured as a detachable fixture for use on a commercial rheometer. The device 201 comprises a chassis 202 that detachably or fixedly connects to a stationary base of the combined motor and transducer commercial rheometer 214 via the support linkage 210, and houses shafts 203 and 204 associated, respectively, with bearings 205 and 206. The motion of shafts 203 and 204 are movably engaged by a coupler 207. Detachably or fixedly connected to the shafts 203 and 204 are, respectively, mixer elements 211 and 212.

A material holding vessel 208 comprises a cavity. The material holding vessel can comprise an open vessel, a multi-lobed, closed container with a sealable port capable of allowing for the introduction of ingredients during the mixing procedure, or other cavities with other sorts of fluid communication properties with the environment. The material holding vessel may comprise an oven or controlled heating and/or cooling means to control the operating temperature of the cavity and the materials therein. The material holding vessel may comprise sensors for measurement of physical or chemical properties. Without limitation, sensors for measurement of physical or chemical properties may comprise sensors for the measurement of temperature, pH, or oxygen. Those skilled in the art will recognize that other conceivable variations of material holding vessel may exist. In the non-limiting embodiment shown in Figure 3, mixer elements 211 and 212 are contained within a material holding vessel 208 that is connected to a stationary base of the rheometer 214 via a mechanical support linkage 209. In certain embodiments mixer elements 211 and 212 are fully contained within material holding vessel 208, are partially contained within material holding vessel 208, or are not contained within a material holding vessel.

With further reference to the non-limiting embodiment shown in Figure 3, the work transmission element 213 translates the motion of the combined motor and transducer device 215 to the shaft 203. In embodiments in which coupler 207 is configured to generate the counter-rotational motion of shafts 203 and 204, the device 201 can be configured to combine and mix the ingredients contained in the material holding vessel 208 via the counter-rotational motion of mixer elements 211 and 212 in a manner consistent with the shaft rotations previously described by Motion 2A. When coupler 207 is configured to generate the co-rotational motion of shafts 203 and 204, the device 201 can be configured to combine and mix the ingredients contained in the material holding vessel 208 via the co-rotational motion of mixer elements 211 and 212 in a manner consistent with the shaft rotations previously described by Motion 2D.

In certain embodiments, device 201 can be wholly accommodated within an oven chamber of a commercial rheometer and/or mixer elements 211 and 212 can be immersed within a temperature controlled mixing chamber.

In the non-limiting embodiment shown in Figure 3, the resultant torque on work transmission element 213 includes an additive combination of torque contributions acting on each mixer element imparted by the material or ingredients being mixed, and with the addition of a torque reducer or multiplier means the torque monitored by the transducer of the rheometer can be specifically reduced or increased to fall within the measurable range of the transducer if so required.

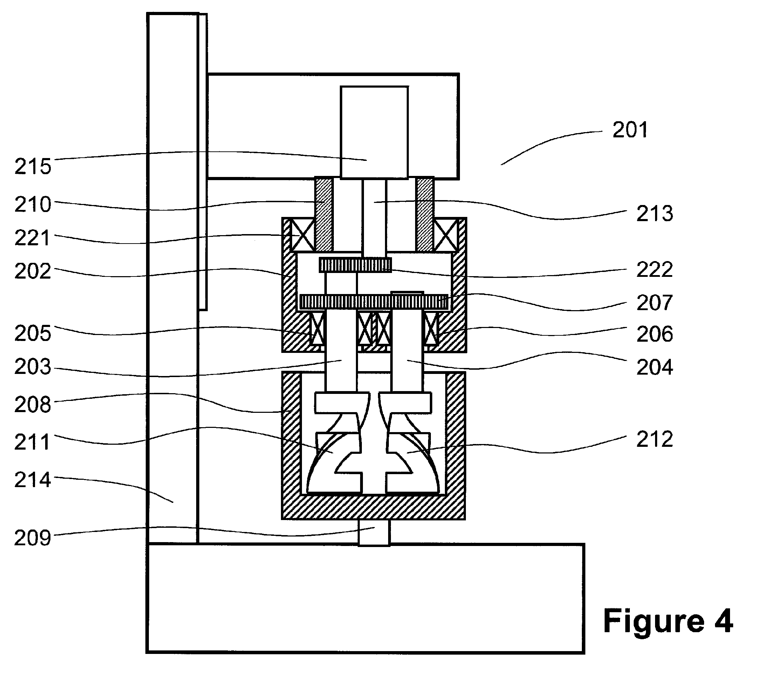

In the non-limiting embodiment shown in Figure 4, the device 201 comprises a detachable fixture on a combined motor and transducer commercial rheometer 214 in which the chassis 202 of the device 201 is engaged with an orbital bearing element 221 that allows rotation of the chassis 202. In the non-limiting embodiment shown in Figure 4, orbital bearing element 221 allows rotation of the chassis 202 about the support linkage 210 which is, in turn, detachably or fixedly engaged to rheometer 214. The work transmission element 213 transmits work from the combined motor and transducer device 215 of the rheometer to the orbital coupler 222. An orbital coupler can be any element by which a first rotary component is induced to rotate about its own axis as well as to revolve about a secondary axis. Without limitation orbital couplers comprise epicyclic gearing, epicyclic belt and pulley assemblies, and epicyclic magnetic bearing coupling. The orbital coupler 222 is engaged with shaft 203. The orbital coupler 222 is adapted to transmit work to shaft 203 as well as to revolve shaft 203 about the axis of orbital bearing element 221. Shaft 203 is rotatably mounted in chassis 202 by bearing 205 and is further engaged with shaft 204. Shaft 203 is engaged with and transmits work to shaft 204 by coupler 207. Shaft 204 is rotatably mounted in chassis 202 by bearing 206

In the non-limiting embodiment shown in Figure 4, shafts 203 and 204 are detachably or fixedly engaged with mixer elements 211 and 212. Mixer elements 211 and 212 are contained within a material holding vessel 208. Material holding vessel 208 is engaged with mechanical support linkage 209. Mechanical support linkage 209 fixedly or detachably engages material holding vessel 208 to the base of the rheometer 214.

Without limitation, in embodiments in which coupler 207 is configured to generate the relative counter-rotational motion of shafts 203 and 204, rotation of the work transmission element 213 drives the motion of the orbital coupler 222 and the orbital rotation of the chassis assembly about the axis of the orbital bearing element 221 resulting in operation of the device 201 in the manner of Motion 2C. Without limitation, in embodiments in which coupler 207 is configured to generate the relative co-rotational motion of shafts 203 and 204, rotation of the work transmission element 213 drives the motion of the orbital coupler 222 and the orbital rotation of the chassis assembly about the axis of the orbital bearing element 221 resulting in operation of the device 201 in the manner of Motion 2F.

In the non-limiting embodiment shown in Figure 4, the resultant torque on work transmission element 213 includes an additive combination of torque contributions acting on each mixer element imparted by the ingredients being mixed, and with the addition of a torque reducer or multiplier means the torque monitored by the transducer of the rheometer can be specifically reduced or increased to fall within the measurable range of the transducer if so required.

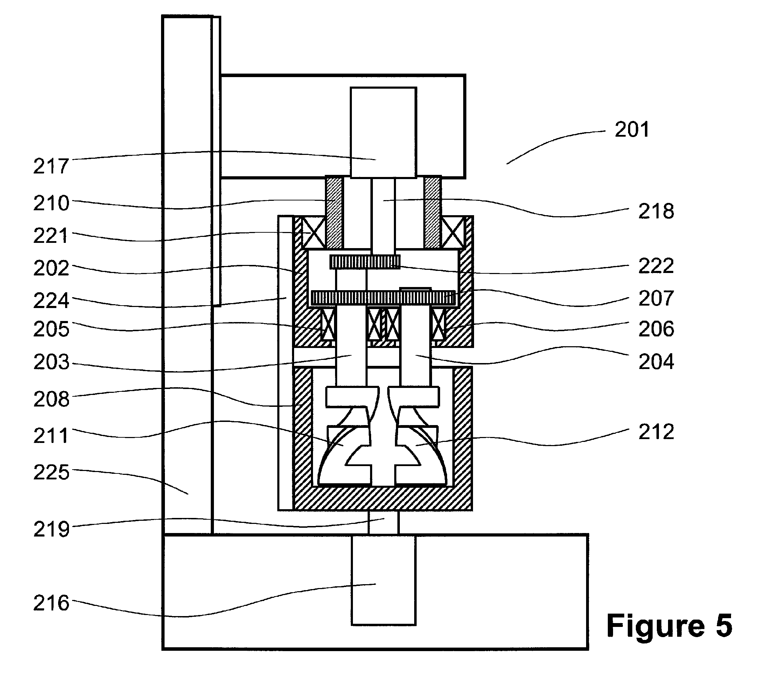

In the non-limiting embodiment shown in Figure 5, the device 201 comprises a detachable fixture on a rheometer 225 comprised of a separate motor 216 and transducer 217 in which the chassis 202 of the device is engaged with an orbital bearing element 221 that allows rotation of the chassis 202. In the non-limiting embodiment shown in Figure 5, orbital bearing element 221 allows rotation of chassis 202 about the support linkage 210 which is, in turn, detachably or fixedly engaged to rheometer 225. The chassis 202 is engaged to material holding vessel 208 by connector linkage 224. The transducer shaft 218 engages the transducer device 217 of the rheometer 225 with the orbital coupler 222. The orbital coupler 222 is engaged with shaft 203. Shaft 203 is rotatably mounted in chassis 202 by bearing 205 and is further engaged with shaft 204. Shaft 203 is engaged with and transmits torque to shaft 204 by coupler 207. Shaft 204 is rotatably mounted in chassis 202 by bearing 206.

In the non-limiting embodiment shown in Figure 5, shafts 203 and 204 are detachably or fixedly engaged with mixer elements 211 and 212. Mixer elements 211 and 212 are contained within a material holding vessel 208. Material holding vessel 208 is engaged with motor 216 by work transmission element 219.

Without limitation, in embodiments in which coupler 207 is configured to generate the relative counter-rotational motion of shafts 203 and 204, rotation of the work transmission element 219 drives the orbital motion of material holding vessel 208 and the attached chassis 202 via linkage 224 about the axis of the orbital bearing element 221 such that the orbital coupler 222 drives the counter-rotation of the mixer elements 211 and 212 resulting in operation of the device 201 in the manner of Motion 2C. Similarly, when the coupler 207 is configured to generate the relative co-rotational motion of hub shafts 203 and 204, the device 201 operates to produce Motion 2F.

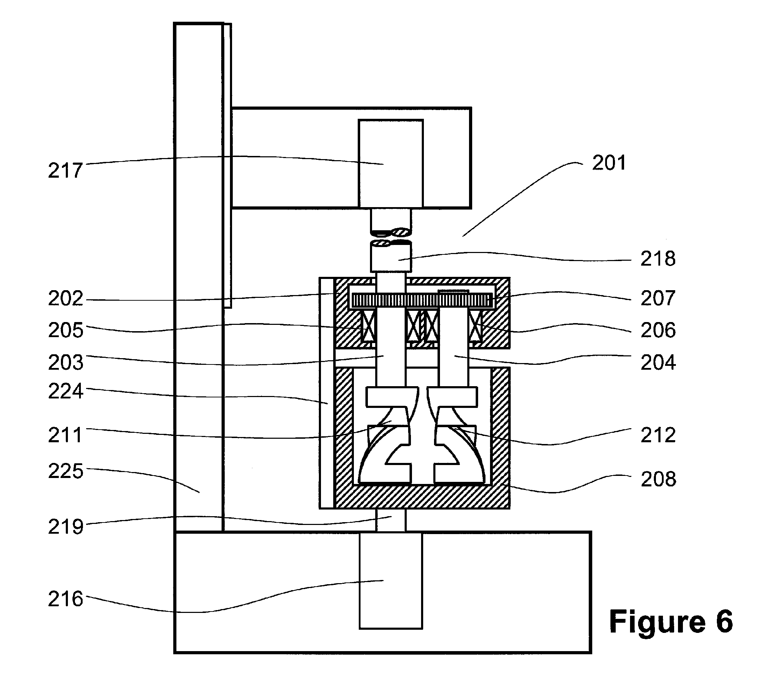

In the non-limiting embodiment shown in Figure 6, the device 201 comprises a detachable fixture on a commercial rheometer 225 comprised of a separate motor 216, a transducer 217, and a chassis 202 engaged with the material holding vessel 208 by connector linkage 224.

The transducer shaft 218 engages the transducer device 217 to shaft 203. Shaft 203 is rotatably mounted in chassis 202 by bearing 205 and is further engaged with shaft 204. Shaft 203 is engaged with and transmits torque to shaft 204 by coupler 207. Shaft 204 is rotatably mounted in chassis 202 by bearing 206. Mixer elements 211 and 212 detachably or fixedly engage shafts 203 and 204. Mixer elements 211 and 212 are contained within the material holding vessel 208. Material holding vessel 208 engages motor 216 through work transmission element 219.

Without limitation, in embodiments in which coupler 207 is configured to generate the relative counter-rotational motion of shafts 203 and 204, rotation of the work transmission element 219 drives the orbital motion of the material holding vessel 208 and the attached chassis 202 via linkage 224 which subsequently drives the counter-rotation of the mixer elements 211 and 212 resulting in operation of the device 201 in the manner of Motion 2B. Similarly, when the coupler 207 is configured to generate the relative co-rotational motion of hub shafts 203 and 204, the device 201 operates to produce Motion 2E.

In certain embodiments, a rheometer attachment comprises a multi-axis screw extruder. In certain embodiments, a rheometer attachment comprises a multi-axis screw extruder that is adapted for conveying, pumping, mixing and/or compounding blends of liquids, solids, semi-solids, and/or viscoelastic media. Without limitation, in embodiments in which the rheometer attachment comprises a multi-axis screw extruder, the rheometer attachment comprises extruder elements. Without limitation, extruder elements can comprise any type of material in any size or shape including feed screws, injection screws, blow-molding screws, segmented screws, mixing screws, hybrid screws, kneading screws, variable flight depth screws, intermeshing screws, gear pump elements, or any other conceivable type of extruder screw element known to those skilled in the art. In certain embodiments in which the rheometer attachment comprises a multi-axis screw extruder, the material holding vessel 208 is adapted to operate as a temperature controlled extruder barrel.

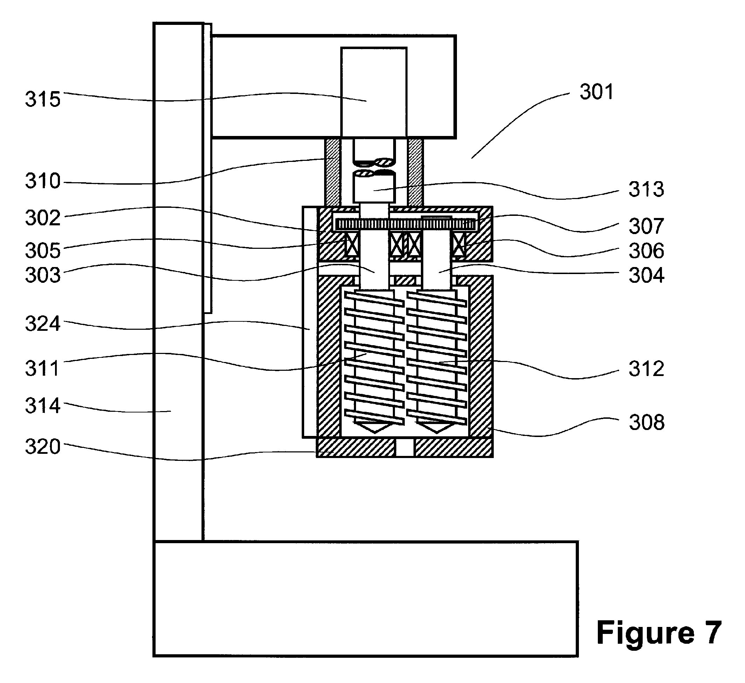

In the non-limiting embodiment shown in Figure 7, the extruder device 301 comprises a chassis 302, engaged with mechanical support linkage 310. The chassis 302 comprises shafts 303 and 304, bearings 305 and 306, and coupler 307. The bearings 305 and 306 rotatably engage the shafts 303 and 304 with the chassis 302. The coupler 307 engages shafts 303 and 304 and transmits torque therebetween.

Screw elements 311 and 312 are detachably or fixedly engaged to, respectively, shafts 303 and 304 and are adapted to rotate with their respectively engaged shaft. Material holding vessel 308 is engaged with chassis 302 by connector linkage 324. Material holding vessel 308 is adapted to at least partially accept screw elements 311 and 312. The screw elements 311 and 312 are adapted to expel material from the material holding vessel 308 by forcing the material through the extrusion die 320 as screw elements 311 and 312 rotate. In certain embodiments, material holding vessel 308 comprises a feed hopper (not shown) adapted to facilitate the introduction of material into the material holding vessel 308. In certain embodiments, material holding vessel 308 comprises an extrusion die 320 adapted for shaping material as it is expelled from the material holding vessel 308.

In certain embodiments, the extruder device 301 is a detachable fixture for use in conjunction with a combined motor and transducer rheometer 314. The extruder device 301 may be engaged with the combined motor and transducer device 315 of the rheometer 314 by a work transmission element 313 that operably connects the combined motor and transducer device 315 of the rheometer 314 to shaft 303. In certain embodiments, the extruder device 301 is adapted to convey, combine, and/or pump ingredients or materials contained in the extruder barrel 308 through extrusion die 320 by counter-rotational motion of screw elements 311 and 312 in a manner consistent with the shaft rotations described by Motion 2A. In certain embodiments, the extruder device 301 is adapted configured to convey, combine, and/or pump ingredients or materials contained in the extruder barrel 308 through extrusion die 320 by co-rotational motion of screw elements 311 and 312 in a manner consistent with the shaft rotations described by Motion 2D.

In certain embodiments, the extruder device 301 can be wholly accommodated within an oven chamber of a commercial rheometer and/or the extruder barrel can be independently temperature controlled to allow for the controlled temperature extrusion of fluids, semi-solids or molten materials.

In the non-limiting embodiment shown in Figure 7, the resultant torque on work transmission element 313 includes an additive combination of torque contributions acting on each screw element imparted by the material or ingredients being extruded, and with the addition of a torque reducer or multiplier means the torque monitored by the transducer of the rheometer can be specifically reduced or increased to fall within the measurable range of the transducer if so required.

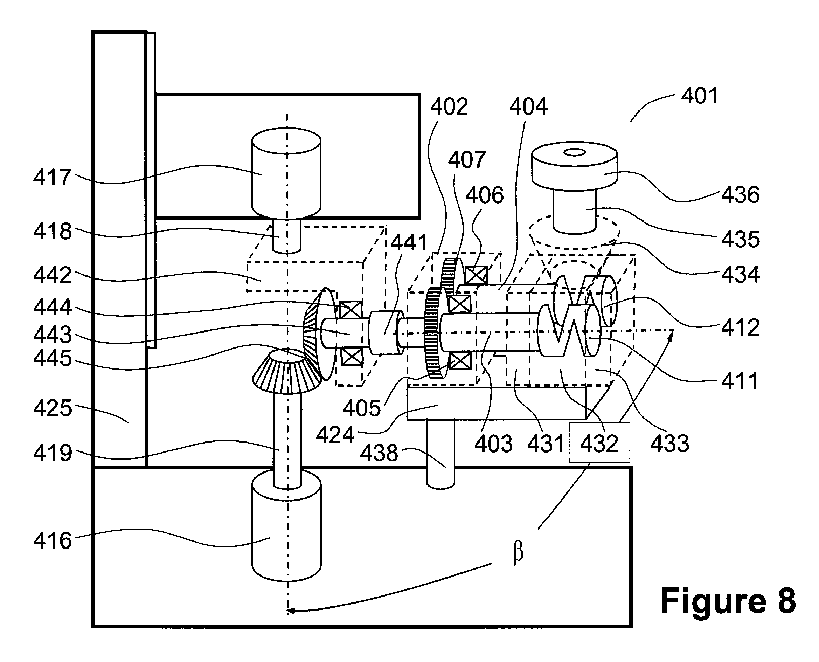

In certain embodiments, a rheometer attachment can be made to operate along a base reference axis not parallel with the axes of the load sensing means and motion generation means of a commercial rheometer. In the non-limiting embodiment shown in Figure 8, the mixing device 401 and all of the associated components housed therein can be made to operate along a reference axis at an angle 13 oblique or orthogonal to the common rotational axis of the rheometer motor 416 and transducer 417. Shafts 403 and 404 are at least partially enclosed by chassis 402 and are rotatably engaged to chassis 402 by bearing 405 and 406. The coupler 407 engages shafts 303 and 304 and transmits torque therebetween. Shafts 403 and 404 are detachably or fixedly engaged with mixer elements 411 and 412. Mixer elements 411 and 412 are at least partially enclosed by material holding vessel 432. Material holding vessel 432 comprises cover plates 431 and 433, chamber port 434, and port plug 435. Cover plates 431 and 433 separate the cavity of the material holding vessel 432 from the environment when in place, but are removable to permit communication between the cavity of the material holding vessel 432 and the environment. Chamber port 434 is a hole adapted to permit communication between the cavity of the material holding vessel 432 and the environment and to permit the introduction of ingredients to the cavity of the material holding vessel 432. Port plug 435 is adapted to close chamber port 434 preventing communication thereby between the cavity of the material holding vessel 432 and the environment. In certain embodiments, the port plug 435 comprises a loading means 436 adapted to exert a containment pressure on ingredients contained within the cavity of the material holding vessel 432.

In the non-limiting embodiment shown in Figure 8, a drive coupling means 445, engaged with drive coupling shaft 443 and bearing 444, engages shaft 403 through a universal coupling means 441 to spindle shaft 419 and, thereby, to rheometer motor 416. Drive coupling means 445 may be at least partially enclosed by the drive coupling housing 442 and is engaged to the rheometer transducer 417 by the transducer shaft 418. In certain embodiments universal coupling means 441 is a telescoping universal joint. In certain embodiments, the drive coupling means 445 is adapted to transmit the rotational motion of the spindle shaft 419 to the shaft 403 while the load imparted by the ingredients mixed with mixer elements 411 and 412 can be resolved as a torque on the transducer 417 as a consequence of the moment resulting from the load on the fulcrum of the drive coupling means 445. Those skilled in the art will recognize that other conceivable configurations may exist not described herein that would enable the object of the present invention to operate along a rotational axis either oblique or orthogonal to the primary rotational axis of the driving and/or load sensing means of the commercial rheometer.

In certain embodiments, the rheometer attachment comprises only a single detachable rotor element such as a single blade mixer or single screw extruder made to operate along a base reference axis not parallel with the axes of the load sensing means and motion generation means of the rheometer. In summary, the rheometer attachment may comprise:
a material processing device adapted for removable engagement with a rheometer, said material processing device comprising, a first rotatable shaft; a second rotatable shaft; a processing element, said processing element engagable with said first rotatable shaft or said second rotatable shaft; and a material holding vessel comprising a cavity.

Said rheometer may comprise a viscoelastic rotational rheometer.

Said first rotatable shaft may be adapted to be rotated by said viscoelastic rotational rheometer.

Said processing element may be adapted to be substantially contained by said cavity.

Said processing element may be detachably engagable with said first rotatable shaft or said second rotatable shaft.

Said processing element may comprise a mixing element.

Said mixing element may be selected from the group consisting of sigma blades, ribbon blades, z-blades, Banbury blades, CAM blades, roller blades, whisk elements, paddle blades, pin rotors, beater pins, impeller blades, turbine blades, vane blades, kneader elements, screw elements, and gear pump elements.

Said processing element may comprise an extrusion element.

The extrusion element may be selected from the group consisting of feed screws, injection screws, blow-molding screws, segmented screws, mixing screws, hybrid screws, kneading screws, variable flight depth screws, intermeshing screws, and gear pump elements.

Said processing element may comprise a chemical or biochemical reaction processing element.

The chemical or biochemical reaction processing element may be selected from the group consisting of stirrer elements and agitator elements.

Said cavity may be a chemical reactor chamber, or a biochemical reactor chamber.

The volume of said cavity may be equal to or less than about 5 ml.

Said cavity may be adapted to be maintained at a controlled temperature or controlled pressure. A method for processing materials may comprise:
removably engaging a material processing device with a rheometer, said material processing device comprising, a first rotatable shaft, a second rotatable shaft, a processing element, said processing element engagable with said first rotatable shaft or said second rotatable shaft, and a material holding vessel comprising a cavity;
introducing material to be processed to the cavity; and
processing said material with said material processing device.
Said rheometer may comprise a viscoelastic rotational rheometer.

Said first rotatable shaft may be adapted to be rotated by said viscoelastic rotational rheometer. Said processing element may be adapted to be contained by said cavity; and Said cavity may be adapted to be maintained at a controlled temperature or at a controlled pressure.

Said processing element may be detachably engagable with said first rotatable shaft or said second rotatable shaft.

Said processing said material with said material processing device may comprise a mixing process.

Said processing said material with said material processing device may comprise an extrusion process.

Said processing said material with said material processing device may comprise a chemical or biochemical reaction process. A rheometer attachment may comprise:
a material processing device adapted for removable engagement with a viscoelastic rotational rheometer, said material processing device comprising, a material holding vessel comprising a cavity, the volume of said cavity being equal to or less than about 5 ml, said cavity being adapted to be maintained at a controlled temperature or controlled pressure; a first rotatable shaft, said first rotatable shaft being adapted to be rotated by said viscoelastic rotational rheometer; a second rotatable shaft; and a processing element, said processing element being detachably engagable with said first rotatable shaft or said second rotatable shaft, said processing element being adapted to be substantially contained by said cavity, and said processing element comprising a mixing element, or an extrusion element, or both a mixing element and an extrusion element.

While the rheometer attachment has been primarily described above in connection with the certain embodiments, it is to be understood that other embodiments may be used or modifications and additions may be made to the described embodiments for performing the same function of the rheometer attachment without deviating therefrom. Further, the rheometer attachment may include embodiments disclosed but not described in exacting detail including, but not limited to, grinders, gear pumps, chemical batch reactors, biochemical batch reactors, and other forms of material processing devices not specifically mentioned herein but known to those skilled in the art. Further, all embodiments disclosed are not necessarily in the alternative, as various embodiments may be combined to provide the desired characteristics. Variations can be made by one having ordinary skill in the art without departing from the spirit and scope of the rheometer attachment. Therefore, the rheometer attachment should not be limited to any single embodiment, but rather construed in breadth and scope in accordance with the recitation of the attached claims.

## Claims

1. A rheometer attachment comprising:
a material processing device adapted for removable engagement with a rheometer, said material processing device comprising, a first rotatable shaft; a second rotatable shaft; a processing element, said processing element engagable with said first rotatable shaft or said second rotatable shaft; and a material holding vessel comprising a cavity.

2. The rheometer attachment of claim 1, wherein said rheometer comprises a viscoelastic rotational rheometer.

3. The rheometer attachment of claim 2, wherein said first rotatable shaft is adapted to be rotated by said viscoelastic rotational rheometer.

4. The rheometer attachment of one of the preceding claims, comprising at least one of the following features:
• said processing element is adapted to be substantially contained by said cavity;
• said processing element is detachably engagable with said first rotatable shaft or said second rotatable shaft.

5. The rheometer attachment of one of the preceding claims, wherein said processing element comprises a mixing element.

6. The rheometer attachment of claim 5, wherein said mixing element is selected from the group consisting of sigma blades, ribbon blades, z-blades, Banbury blades, CAM blades, roller blades, whisk elements, paddle blades, pin rotors, beater pins, impeller blades, turbine blades, vane blades, kneader elements, screw elements, and gear pump elements.

7. The rheometer attachment of one of the preceding claims, wherein said processing element comprises an extrusion element.

8. The rheometer attachment of claim 7, wherein the extrusion element is selected from the group consisting of feed screws, injection screws, blow-molding screws, segmented screws, mixing screws, hybrid screws, kneading screws, variable flight depth screws, intermeshing screws, and gear pump elements.

9. The rheometer attachment of one of the preceding claims, wherein said processing element comprises a chemical or biochemical reaction processing element.

10. The rheometer attachment of claim 9, wherein the chemical or biochemical reaction processing element is selected from the group consisting of stirrer elements and agitator elements.

11. The rheometer attachment of one of the preceding claims, comprising at least one of the following features:
• the volume of said cavity is equal to or less than about 5 ml;
• said cavity is adapted to be maintained at a controlled temperature or controlled pressure.

12. The rheometer attachment of one of the preceding claims, wherein said cavity is a chemical reactor chamber, or a biochemical reactor chamber.

13. A method for processing materials comprising:
removably engaging a material processing device with a rheometer, said material processing device comprising, a first rotatable shaft, a second rotatable shaft, a processing element, said processing element engagable with said first rotatable shaft or said second rotatable shaft, and a material holding vessel comprising a cavity;
introducing material to be processed to the cavity; and
processing said material with said material processing device.

14. The method of claim 13, comprising at least one of the following:
• said rheometer comprises a viscoelastic rotational rheometer;
• first rotatable shaft is adapted to be rotated by said viscoelastic rotational rheometer.
• the volume of said cavity is equal to or less than about 5 ml;
• said processing element is adapted to be contained by said cavity;
• said cavity is adapted to be maintained at a controlled temperature or at a controlled pressure;
• said processing element is detachably engagable with said first rotatable shaft or said second rotatable shaft;
• said processing element comprises a mixing element;
• said mixing element is selected from the group consisting of sigma blades, ribbon blades, z-blades, Banbury blades, CAM blades, roller blades, whisk elements, paddle blades, pin rotors, beater pins, impeller blades, turbine blades, vane blades, kneader elements, screw elements, and gear pump elements;
• said processing said material with said material processing device comprises a mixing process;
• said processing element comprises an extrusion element;
• said extrusion element is selected from the group consisting of feed screws, injection screws, blow-molding screws, segmented screws, mixing screws, hybrid screws, kneading screws, variable flight depth screws, intermeshing screws, and gear pump elements;
• said processing said material with said material processing device comprises an extrusion process;
• said processing element comprises a chemical or biochemical reaction processing element;
• said chemical or biochemical reaction processing element is selected from the group consisting of stirrer elements and agitator elements;
• said processing said material with said material processing device comprises a chemical or biochemical reaction process.

15. A rheometer attachment comprising:
a material processing device adapted for removable engagement with a viscoelastic rotational rheometer, said material processing device comprising, a material holding vessel comprising a cavity, the volume of said cavity being equal to or less than about 5 ml, said cavity being adapted to be maintained at a controlled temperature or controlled pressure; a first rotatable shaft, said first rotatable shaft being adapted to be rotated by said viscoelastic rotational rheometer; a second rotatable shaft; and a processing element, said processing element being detachably engagable with said first rotatable shaft or said second rotatable shaft, said processing element being adapted to be substantially contained by said cavity, and said processing element comprising a mixing element, or an extrusion element, or both a mixing element and an extrusion element.
